# EUROPÄISCHE PATENTSCHRIFT

(11) **EP 0 920 543 B1**
(45) Veröffentlichungstag und Bekanntmachung des Hinweises auf die Patenterteilung: **31.10.2001**
(21) Anmeldenummer: 98925552.6
(22) Anmeldetag: 07.05.1998
(51) Int. Cl.: C23C 16/00

(54) **QUARZGLAS-BAUTEIL FÜR EIN REAKTORGEHÄUSE SOWIE HERSTELLUNGSVERFAHREN UND ANWENDUNG DAFÜR**
QUARTZ GLASS COMPONENT FOR A REACTOR HOUSING AND METHOD FOR ITS PRODUCTION AND APPLICATION
COMPOSANT DE VERRE AU QUARTZ POUR ENVELOPPE DE REACTEUR, SON PROCEDE DE FABRICATION ET SON UTILISATION

(30) Priorität: 07.05.1997 DE 19719133
(43) Veröffentlichungstag der Anmeldung: 09.06.1999
(73) Patentinhaber: Heraeus Quarzglas GmbH & Co. KG, 63450 Hanau (DE)
(72) Erfinder: HELLMANN, Dietmar, D-63589 Linsengericht (DE); LEIST, Johann, D-63674 Altenstadt (DE)
(86) Internationale Anmeldenummer: EP9802685
(87) Internationale Veröffentlichungsnummer: WO9850599

(56) Entgegenhaltungen:
- EP-A- 0 319 031
- EP-A- 0 763 504

## Beschreibung

Die Erfindung betrifft ein Quarzglas-Bauteil für ein Reaktorgehäuse, umfassend einen Substratkörper aus einer ersten Quarzglas-Qualität, mit einer einem Reaktor-Innenraum zugewandten Innenoberfläche, die in mindestens einem Aufrauhungsbereich eine mittlere Rauhtiefe Rₐ von mehr als 1 µm aufweist. Weiterhin betrifft die Erfindung ein Verfahren zur Herstellung eines Quarzglas-Bauteils für ein Reaktorgehäuse, insbesondere für eine Reaktorkammer einer Plasma-Ätzvorrichtung, umfassend die folgenden Verfahrensschritte: a) Formen eines Rohlings aus SiO₂-haltiger Körnung und b) teilweises oder vollständiges Verglasen des Rohlings durch Erhitzen auf eine Temperatur oberhalb von 1000 °C.

Quarzglasbauteile der angegebenen Gattung werden beispielsweise als Quarzglas-Glocken für die Reaktorkammern in Plasma-Ätzvorrichtungen verwendet. Derartige Ätzvorrichtungen werden für das Ätzen von Halbleiterscheiben eingesetzt. Die Oberfläche von Halbleiterscheiben ist nach einer chemischen Vorbehandlung üblicherweise mit dielektrischen Schichten, wie Oxid- oder Nitridschichten, oder elektrisch leitenden Schichten, wie Silizid- oder Polysiliziumschichten, belegt. Zur Herstellung einer freien Siliziumoberfläche werden diese Schichten mittels eines Plasmaprozesses abgetragen. Dabei schlagen sich die abgetragenen Materialien wiederum als Schichten auf den Innenwandungen der Reaktorkammer nieder. Ab einer gewissen Schichtdicke platzen diese Schichten ab und führen so zu Partikelproblemen. Um dies zu verhindern, werden die entsprechenden Oberflächen von Zeit zu Zeit gereinigt. Das Reinigen der Oberflächen ist zeit- und kostenaufwendig. Um den Aufwand zu verringern, sind möglichst lange Zeitintervalle zwischen den Reinigungsschritten erwünscht.

Es ist bekannt, daß aufgerauhte Oberflächen dickere Schichten halten können. Zum Aufrauhen der Innenoberflächen von Quarzglas-Glocken werden üblicherweise Sandstrahlverfahren eingesetzt. Üblicherweise wird eine mittlere Rauhigkeit von wenigstens 1 um erwünscht. Der Wert für die mittlere Rauhtiefe Rₐ wird entsprechend DIN 4768 ermittelt.

Durch das Sandstrahlen werden auf der Quarzglas-Oberfläche zwar Strukturen erzeugt, die einerseits zu einer festeren Haftung von Schichten beitragen, andererseits werden dadurch aber auch von der Oberfläche ausgehende Risse erzeugt, die wiederum zu einem Abblättern der Schichten führen. Dies führt zu Patikelproblemen im Reaktorraum. Darüberhinaus erweist sich eine homogene Bearbeitung der gesamten Innenoberfläche einer Quarzglas-Glocke und die Einhaltung exakter Dimensionen beim Sandstrahlen als problematisch. Durch mehrmaliges Sandstrahlen verändert sich die Rauhigkeit der Innenoberfläche. Dies kann die weitere Brauchbarkeit der Glocke und damit deren Lebensdauer beeinträchtigen.

Für die Herstellung einer Quarzglas-Glocke für eine Reaktorkammer kann die Einstreutechnik eingesetzt werden, wie sie für die Herstellung von Tiegeln aus Quarzglas verwendet wird. Ein Verfahren zur Herstellung einer Glocke aus Quarzglas für die Raktorkammer einer CVD-Beschichtungsanlage ist in der EP-A2 715 342 beschrieben. Zunächst wird in eine metallische Schmelzform kristallines oder amorphes SiO₂-Pulver eingefüllt und dieses unter Rotation der Schmelzform um ihre vertikale Achse zu einer körnigen Außenschicht mit einer Schichtdicke von etwa 20 mm geformt. Die Außenschicht wird anschließend mittels eines Lichtbogens von innen erhitzt und aufgeschmolzen bzw. gesintert. Die Innenoberfläche des so hergestellten Quarzglas-Rohlings ist dicht und glatt. Zur Aufrauhung ist das oben angegebene Sandstrahlverfahren geeignet. Durch Anschmelzen eines Flansches an den Rohling wird die Quarzglas-Glokke fertiggestellt.

Das bekannte Verfahren ist besonders empfindlich in Bezug auf die Homogenität des Temperaturfeldes während des Einstreuens der Körnung und während des Verglasens. Davon hängt die Rauhigkeit der Innenoberfläche nach dem Sandstrahlen ab. Die reproduzierbare Einhaltung der Rauhigkeit erfordert einen hohen Aufwand.

Der Erfindung liegt die Aufgabe zugrunde, ein Quarzglas-Bauteil für ein Reaktorgehäuse anzugeben, das möglichst keine Partikel in der Reaktorkammer erzeugt, und das sich durch hohe Haftfestigkeit für Materialschichten und eine besonders lange Lebensdauer auszeichnet. Weiterhin liegt der Erfindung die Aufgabe zugrunde, ein einfaches Verfahren zur Herstellung eines derartigen Quarzglas-Bauteils bereitzustellen, das die reproduzierbare Einstellung einer vorgegebenen Oberflächenrauhigkeit ermöglicht.

Hinsichtlich des Quarzglas-Bauteils wird diese Aufgabe ausgehend von der eingangs beschriebenen Quarzglas-Glocke erfindungsgemäß dadurch gelöst, daß im Aufrauhungsbereich eine auf dem Substratkörper ausgebildete Blasenschicht aus einer zweiten Quarzglas-Qualität vorgesehen ist, die offene Poren aufweist.

Der Aufrauhungsbereich umfaßt denjenigen Teil der dem Reaktor-Innenraum zugewandten Innenoberfläche des Quarzglas-Bauteils, auf dem beispielsweise ein Abscheiden von Materialschichten während des bestimmungsgemäßen Einsatzes des Bauteils erwartet wird. Er kann auch die gesamte Innenoberfläche des Quarzglas-Bauteils umfassen. Das Abscheiden von Materialschichten kann aufgrund chemischer Reaktionen erfolgen, oder aufgrund physikalische Vorgänge, wie Erhitzen, Verdampfen, Erschmelzen, Sublimieren usw. Die Blasenschicht umfaßt den ganzen Aufrauhungsbereich oder einen Teil davon. Durch die Blasenschicht kann nicht nur die Haftung von Materialschichten verbessert werden, sondern darüberhinaus können mittels der Blasenschicht auch optische Eigenschaften des Bauteils, wie Transmission oder Absorption, im Aufrauhungsbereich gezielt beeinflußt werden.

Die offenen Poren im Aufrauhungsbereich führen zu einer besonders geeigneten Art der Oberflächenrauhigeit, im Hinblick auf eine feste Haftung darauf abgeschiedener Materialschichten. Die offenen Poren bilden im Aufrauhungsbereich eine Oberflächen-Mikrostruktur, die sich durch eine Vielzahl von Haftstellen und Angriffspunkten für darauf abgeschiedene Schichten auszeichnet. Darüberhinaus trägt die Porenstruktur zu einer günstigen Spannungsverteilung zwischen dem Quarzglas und dem Schichtmaterial bei, indem eine dreidimensionale Verteilung der entstehenden Spannungen gewährleistet wird. Aufgrund der offenen Poren wird eine besonders hohe Haftfestigkeit für Materialschichten erreicht, die es erlaubt, ohne Gefahr von Abplatzungen, ein Abscheiden besonders dicker Materialschichten auf der Innenoberfläche des Quarzglas-Bauteils zuzulassen. Die Zeitintervalle für die Reinigung können daher verlängert werden, was die Lebensdauer der Quarzglas-Bauteil verlängert.

Dazu trägt auch bei, daß im Aufrauhungsbereich eine porenhaltige Blasenschicht vorgesehen ist. Außer den offenen Poren im oberflächennahen Bereich enthält die Blasenschicht auch Poren, die nicht unmittelbar an der Innenoberfläche enden. Diese Poren können geschlossen sein. Durch einen Abtrag oberflächennaher Bereiche der Blasenschicht, beispielsweise während des bestimmungsgemäßen Einsatzes des Quarzglas-Bauteils in einer Ätzanlage oder auch beim Entfernern darauf abgeschiedener Materialschichten durch Ätzen oder durch Sandstrahlen, werden diese tieferliegenden Poren zu offenen, unmittelbar an der Oberfläche endenden Poren. Die durch die offene Porosität charakterisierte Oberflächen-Mikrostruktur ändert sich daher auch bei einem Abtrag oberflächennaher Schichten nicht oder nur unwesentlich, solange die Blasenschicht nicht abgetragen ist. Dies trägt zu einer zeitlich konstanten Rauhigkeit der Innenoberfläche und damit zu einer langen Lebensdauer des Quarzglas-Bauteils bei.

Die Blasenschicht ist auf dem Substratkörper ausgebildet. Sie macht somit nur einen Teil der Wandstärke des Quarzglas-Bauteils im Aufrauhungsberich aus. Das Bauteil umfaßt daher mindestens zwei Schichten, die sich in ihrer Quarzglas-Qualität unterscheiden, wobei hier unter dem Begriff "Qualität" die Summe der chemischen, physikalischen oder optischen Eigenschaften der jeweiligen Quarzgläser bezeichnet sein sollen. Die Blasenschicht, die nur einen Teil der Wandstärke des Bauteils umfaßt, kann besipielsweise im Hinblick auf die Haftfestigkeit von Materialschichten optimiert sein, während der Substratkörper hinsichtlich anderer Eigenschaften, wie Transmission, mechnischer Festigkeit oder Herstellungskosten Vorteile haben kann.

Unter einem Reaktor wird im folgenden ein Reaktionsgefäß verstanden, innerhalb von dem chemische Reaktionion oder physikalische Vorgänge, wie Erhitzen, Verdampfen, Erschmelzen, Sublimieren usw. vollständig oder zum Teil ablaufen. Das Quarzglas-Bauteil kann beispielsweise als Abdeckung für das Gehäuse des Reaktors oder als Reaktor-Gehäuse selbst dienen. Derartige Gehäuse sind in vielerlei Formen bekannt, beispielsweise als Glocke, Rohr oder Halbschale.

Vorteilhafterweise liegt die mittlere Dicke der porenhaltigen Blasenschicht im Bereich von 0.5 mm bis 5 mm, wobei sie in porenfreies oder porenarmes Quarzglas eingebettet ist. Die porenhaltige Blasenschicht zeichnet sich durch eine große spezifische Oberfläche aus. Diese kann relativ leicht abgesputtert werden, so daß die laterale Ausdehnung der Blasenschicht auf das Erforderliche beschränkt wird. Eine Blasenschicht wird dabei nur in demjenigen Bereich der Innenoberfläche vorgesehen, in dem während des Einsatzes des Bauteils die stärkste Abscheidung zu erwarten ist. Im übrigen kann die Innenoberfläche porenfrei oder porenarm sein. Als porenarm wird ein Quarzglas bezeichnet, bei dem die Blasenhäufigkeit maximal 0.003 pro cm⁻³ Quarzglas beträgt, wobei Blasen mit einem mittleren Durchmesser von weniger als 10 µm außer Betracht gelassen werden. Die Dicke der Blasenschicht kann innerhalb eines Bauteils variieren. Beispielsweise kann sie in Bereichen größere Abtragung dicker ausgebildet sein und zum Rand dieser Bereiche hin allmählich dünner werden. Aufgrund ihrer Blasenhaltigkeit zeichnet sich die Blasenschicht auch durch eine geringe optische Transmission aus, so daß dickere Blasenschichten in Bereichen nützlich sein können, in denen einfallende Strahlung in den Reaktor abgeschirmt oder die Streuung optischer Strahlung aus dem Reaktor vermindert werden soll.

Durch die Einbettung der Blasenschicht in porenfreies oder porenarmes Quarzglas werden freie Schichtränder vermieden. Derartige freie Schichtränder könnten die Haftfestigkeit für abgeschiedene Materialschichten vermindern und sie stellen eine Verunreinigungsquelle dar. Die seitlichen Ränder der Blasenschicht können kontinuierlich in Bereiche aus porenfreiem oder porenarmem Quarzglas übergehen.

In einer besonders bevorzugten Ausführungsform des erfindungsgemäßen Quarzglas-Bauteils wird die Innenoberfläche in einem Abtragungsbereich aus einer Transparentschicht aus hochreinem Quarzglas gebildet. Denn in Abhängigkeit von der Stärke und Position eines Plasmas in der Reaktorkammer kann es zu Abtragungen der Innenoberfläche des Quarzglas-Bauteils in einem Abtragungsbereich kommen. Aufgrund von im Quarzglas enthaltenen Verunreinigungen kann ein Abtrag zu Verunreinigungen des Reaktorinnenraumes führen. Gemäß der Erfindung ist im Abtragungsbereich eine Transparentschicht aus hochreinem Quarzglas vorgesehen. Die Transparentschicht ist porenfrei und transparent; sie besteht aus vollständig verglastem Quarzglas. Sie zeichnet sich durch eine kleine spezifische Oberfläche aus, was einen Abtrag behindert. Darüberhinaus gewährleistet das hochreine Quarzglas, daß möglichst wenig Verunreigungen in die Reaktorkammer abgegeben werden. Unter einem hochreinen Quarzglas wird insbesondere ein synthetisch hergestelltes Quarzglas verstanden. Dieses ist relativ teuer; dadurch, daß die Transparentschicht aber nur einen Teil der Innenoberfläche bildet, können die Herstellungskosten gering gehalten werden.

Dies trifft insbesondere zu, für eine Transparentschicht mit einer mittleren Dicke im Bereich von 0.5 mm bis 5 mm, die in Quarzglas geringerer Reinheit eingebettet ist. Die Transparentschicht bedeckt Quarzglas geringerer Reinheit und gleichzeitig geht sie an ihren Rändern in Bereiche aus Quarzglas geringerer Reinheit über. Freie Ränder und die damit einhergehenden Nachteile, wie sie weiter oben erläutert sind, werden vermieden. Eine gleichmäßige Dicke der Transparentschicht ist nicht erforderlich.

Ein besonderer Vorteil des erfindungsgemäßen Quarzglas-Bauteils besteht darin, daß unterschiedlich beanspruchte Bereiche der Innenoberfläche, nämlich der Aufrauhungsbereich einerseits und der Abtragungsbereich andererseits, in ihren chemischen, optischen oder morphologischen Eigenschaften an die jeweiligen Beanspruchungen angepaßt sind.

Als besonders vorteilhaft hat es sich eine Blasenschicht erwiesen, bei der das mittlere Porenvolumen mindestens 3 %, bevorzugt mindestens 5 % beträgt. Unterhalb eines Porenvolumens von 3 % ist der Effekt der Blasenschicht, insbesondere in Bezug auf die Haftfestigkeit, gering.

Als günstig im Hinblick auf die Haftfestigkeit von Materialschichten hat sich eine Blasenschicht erwiesen, bei der der mittlere Durchmesser der Poren im Bereich zwischen 50 µm und 150 µm liegt. Poren mit sehr kleinen Durchmessern können in dieser Hinsicht unberücksichtigt bleiben, so daß für die Ermittlung des mittleren Durchmessers Poren mit einem Durchmesser von weniger als 10 µm außer acht gelassen werden.

Durch besonders hohe Haftfestigkeit von Materialschichten zeichnet sich eine Ausführunsgform des Quarzglas-Bauteils aus, bei dem die mittlere Porendichte in der Blasenschicht mindestens 30 Poren/mm² beträgt.

Hinsichtlich des Verfahrens wird die oben angegebene Aufgabe ausgehend von den eingangs erläuterten Verfahrensschritten a) und b) erfindungsgemäß dadurch gelöst,
c) daß der Körnung beim Formen der Innenoberfläche des Rohlings in einem Aufrauhungsbereich eine beim Verglasen unter Freisetzung eines Gases reagierende Zusatzkomponente eingesetzt wird, und
d) daß durch die Freisetzung des Gases im Aufrauhungsbereich eine porenhaltige Blasenschicht erzeugt wird.

Beim erfindungsgemäßen Verfahren wird der SiO₂-haltigen Körnung beim Formen der Innenoberfläche des Rohlings im Aufrauhungsbereich eine Zusatzkomponente zugegeben, die beim Verglasen der Körnung unter Bildung der Blasenschicht Gase erzeugt. Durch das Verfahren wird die Innenoberfläche im Aufrauhungsbereich gezielt verändert. Dicke und Ausdehnung der Blasenschicht werden durch die Menge und die lokale Verteilung der Zusatzkomponente bestimmt.

Beim Formen der Innenoberfläche kann der Rohling im übrigen als poröser, noch zu verglasender Körper vorliegen, oder bereits in Form eines Quarzglas-Körpers. Die oben genannten Verfahrensschritte a) und b) können glecihzeitig oder nacheinander ausgeführt werden. Die gezielte lokale Verteilung der Zusatzkomponente beim Formen der Innenoberfläche stellt für den Fachmann kein Problem dar. Es sind hierfür eine Vielzahl von Verfahren bekannt, beispielsweise durch Einstreuen, Aufschütten, Beschichten. Insbesondere bei der sogenannten Einstreutechnik wird hierzu die mit der Zusatzkomponente versehene SiO₂-Körnung beim Einstreuen in die Form mittels eines Lichtbogens erweicht und gleichzeitig aufgrund der vom Lichtbogen erzeugten Gasströmung in Richtung auf die Innenwand der Form geschleudert, wo sie dann haften bleibt.

Die Art und Weise der Zugabe der Zusatzkomponente zu der SiO₂-Körnung spielt für die Erfindung keine Rolle. Sie kann beispielsweise zugemischt oder zudotiert werden. Es ist auch möglich, mit der Zusatzkomponente getränkte oder beschichtete SiO₂-Kömung einzusetzen. Wesentlich ist, daß die Zusatzkomponente bei den üblichen Verglasungstemperaturen, die zwischen 1500 °C und 2000 °C liegen, Gas abgibt. Das Gas kann sich beispielsweise aufgrund Zersetzung der Zusatzkomponente oder durch chemische Reaktion bilden. Durch die Gasbildung wird die beim Verglasen weiche Innenoberfläche im Aufrauhungsbereich blasig.

Das Ausmaß der Blasigkeit hängt von der freigesetzten Gasmenge und von der Viskosität des Quarzglases beim Verglasen ab. Sie läßt sich durch die Art und Menge der Zusatzkomponente und durch die Verglasungstemperatur reproduzierbar einstellen. Da die Blasigkeit der Blasenschicht die spätere Rauhigkeit der Innenoberfläche im Abscheidungbereich wesentlich bestimmt, läßt sich auch diese leicht reproduzierbar einstellen und einhalten.

Nach dem Verglasen der Innenoberfläche kann die Oberfläche der Blasenschicht glatt sein. Das heißt, sie weist geschlossene, aber keine oder nur wenig offene Poren auf. Eine weitere Bearbeitung der Innenoberfläche mit dem Ziel, den Aufrauhungsbereich aufzurauhen ist aber nicht unbedingt erforderlich. Denn beim späteren Einsatz der Quarzglas-Bauteil wird die Innenoberfläche häufig zwangsläufig abgetragen, sei es bei der Reinigung der Bauteil oder während ihres bestimmungsgemäßen Einsatzes, wodurch geschlossene Poren der Blasenschicht geöffnet werden und sich die gewünschte Oberflächenrauhigkeit einstellt. Eine geschlossene, glatte Blasenschicht hat den Vorteil, daß sie nicht so leicht verunreinigt wird, beispielsweise beim Transport des Bauteils bzw. eines Rohlings dafür, und sich auch leichter reinigen läßt.

Üblicherwiese wird die gewünschte Oberflächenrauhigkeit bereits werkseitig hergestellt. Gegebenenfalls werden zum Aufrauhen oberflächennahe Poren der Blasenschicht geöffnet. Zum Öffnen der Poren wird die Blasenschicht oberflächlich abgetragen. Hierfür sind die bekannten Maßnahmen, wie Schleifen, Sandstrahlen oder Ätzen geeignet. Die Rauhigkeit der Oberfläche hängt danach in erster Linie von Porenverteilung und der Porengröße ab. Diese ergibt sich aufgrund der Blasigkeit der Blasenschicht, die, wie oben dargelegt, nach Bedarf und reproduzierbar eingestellt werden kann. Die dabei abzutragende Schichtdicke ist gering, so daß, insbesondere beim Öffnen der Poren durch Ätzen, die dadurch erzeugte Rauhigkeit der Innenoberfläche im Aufrauhungsbereich nicht mit einer Schädigung der Innenoberfläche einhergeht. Es wird eine rauhe, aber unbeschädigte Innenoberfläche mit großem Haftvermögen erzeugt, die nicht zu Partikelproblemen beiträgt. Die eingangs beschriebenen Nachteile der sandgestrahlten Innenoberfläche werden dadurch vermieden.

Besonders bevorzugt wird aber eine Verfahrensweise, bei der das Öffnen der Poren durch Ätzen erfolgt. Beschädigungen der Innenoberfläche werden dabei vermieden.

Alternativ dazu kann das Öffnen der Poren aber auch vorteilhaft durch Sandstrahlen erfolgen, wobei Quarzglaskörnung eingesetzt wird. Quarzglaskörnung ist im Vergleich zu den üblicherweise verwendeten Sandstrahl-Kömungen, wie beispielsweise SiC, relativ weich. Daher wird die Innenoberfläche nur wenig in Mitleidenschaft gezogen. Die Verwendung der weicheren Körnung wird ermöglicht, weil mit dem Sandstrahlen nicht die Rauhigkeit der Oberfläche erzeugt werden soll, was einen relativ starken Abtrag erfordern würde, sondern lediglich die Poren der Blasenschicht geöffnet werden, wozu ein geringer Abtrag ausreicht.

Als besonders vorteilhaft hat sich der Einsatz von Si₃N₄ als Zusatzkomponente erwiesen. Si₃N₄ ist beim Verglasen der SiO₂-Körnung in sauerstoffhaltiger Atmosphäre unter Bildung stickstoffhaltiger Gase und SiO₂ oxidierbar. Halbleitergifte, die die Brauchbarkeit des Quarzglas-Bauteils einschränken würden, entstehen dabei nicht. Auch das im Quarzglas enthaltene Si₃N₄ selbst ist in dieser Hinsicht unbedenklich.

Bei einer besonders bevorzugten Verfahrensweise wird beim Formen der Innenoberfläche des Rohlings nach Verfahrensschritt a) in einem Abtragungsbereich hochreine SiO₂-Körnung eingesetzt, die beim Verglasen nach Verfahrensschrit b) zu einer Transparentschicht verglast wird. Betreffend die Wirkung und Anordnung des Abtragungsbereiches wird auf die entsprechenden obigen Erläuterungen zum erfindungsgemäßen Bauteil verwiesen.

Hochreine Quarzglas-Körnung wird nur im Abtragungsbereich eingesetzt; im übrigen kann preiswertere Körnung verwendet werden. Unter einen hochreinen SiO₂-Körnung wird insbesondere eine Körnung aus synthetisch hergestelltem SiO₂ verstanden.

Durch Ausbilden eines Flansches und gegebenenfalls durch Aufrauhen im Aufrauhungsbereich wird die Quarzglas-Bauteil fertiggestellt. Das erfindungsgemäße Verfahren erlaubt es somit, verschiedene Bereiche der Innenoberfläche der Quarzglas-Bauteil hinsichtlich ihrer chemischen Zusammensetzung und ihrer Morphologie unterschiedlich zu gestalten und im Hinblick auf die jeweiligen Beanspruchungen und Funktionen zu optimieren.

Das erfindungsgemäße Bauteil hat sich bei einer Verwendung als Reaktorkammer einer Plasma-Ätzvorrichtung als besonders geeignet erwiesen.

Die Erfindung wird nachfolgend anhand von Ausführungsbeispielen und einer Patentzeichnung näher erläutert. In der Zeichnung zeigen im einzelnen:
- **Figur 1**: einen Querschnitt einer ersten Ausführungsform des erfindungsgemäßen Bauteils in Form einer Quarzglas-Glocke in schematischer Darstellung
- **Figur 2**: ebenfalls in schematischer Darstellung eine weitere Ausführungsform einer erfindungsgemäßen Quarzglas-Glocke anhand eines Ausschnittes,
- **Figur 3**: einen Querschnitt einer weiteren Ausführungsform des erfindungsgemäßen Bauteils in Form eines Heizrohres in schematischer Darstellung, und
- **Figur 4**: eine rasterelektronenmikroskopische Aufnahme einer Blasenschicht.

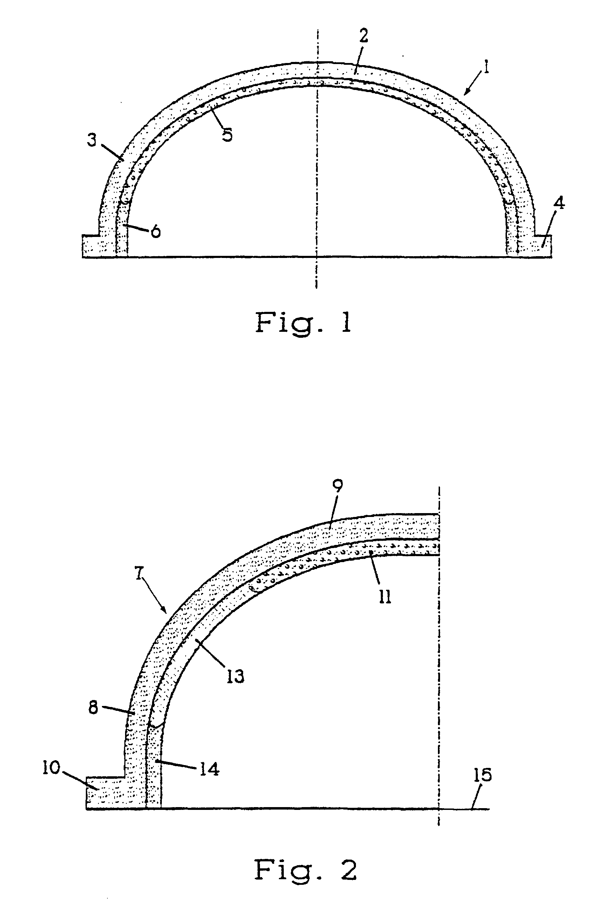

In **Figur 1** ist eine Quarzglas-Glocke aus einem kuppelförmigen Basiskörper 1 dargestellt, dessen Kuppeldecke mit der Bezugsziffer 2 und dessen Seitenwand mit der Bezugsziffer 3 gekennzeichnet ist. Der Übergang zwischen Kuppeldecke 2 und Seitenwand 3 ist fließend. Der freie Rand des Basiskörpers 1 ist mit einem Flansch 4 versehen. Basiskörper 1 und Flansch 4 bestehen aus opakem Quarzglas, das aus natürlich vorkommenden Quarzrohstoffen erschmolzen ist.

Die Innenwandung des Basiskörpers 1 ist mit einer porenhaltigen Schicht, die im folgenden als HMBL-Schicht 5 (high micro bubble layer) beschichtet, und von einer transparenten Quarzglas-schicht 6 versehen. Die HMBL-Schicht 5 bedeckt die gesamte Kuppeldecke 2 und auch den größten Teil der Seitenwand 3. Im unteren Teil der Seitenwand 3 geht die HMBL-Schicht 5 in die Quarzglasschicht 6 über. Beide Schichten 5; 6 sind ca. 4 mm dick.

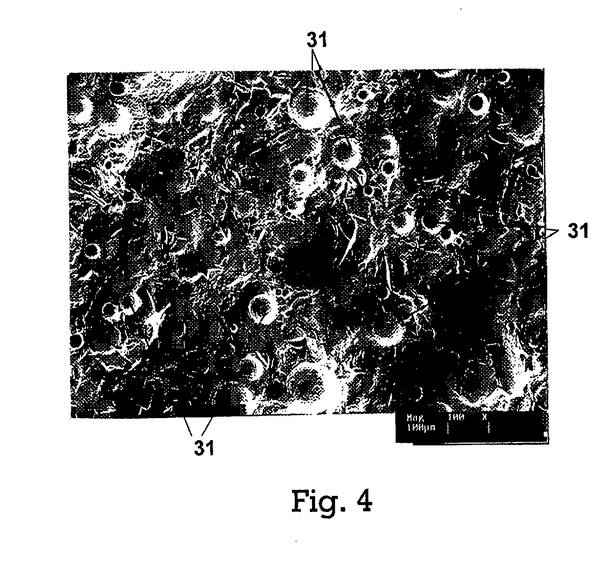

Die Oberflächenstruktur der HMBL-Schicht 5 ist aus der rasterelektronenmikroskopischen Aufnahme von **Figur 4** ersichtlich. Die HMBL-Schicht 5 enthält eine Vielzahl von offenen Mikroporen 31 mit einem Porendurchmesser von weniger als 100 µm. Der Mittelwert des Porendurchmessers liegt bei ca. 50 µm. Die Häufigkeit pro Flächeneinheit von relativ großen offenen Mikroporen 31 mit einem Durchmesser von ca. 10 µm und mehr liegt bei ca. 50 pro mm². Die Mikroporen 31 bilden Haftpunkte für darauf abgeschiedene Materialschichten und sie tragen zur Rauhigkeit der Innenoberfläche bei. Zusätzlich ist die in Figur 4 dargestellte Oberfläche durch Sandstrahlen unter Verwendung von Quarzglaskörnung aufgerauht und anschließend zum Entfemen anhaftender Partikelkurz geätzt worden. Der Wert für die mittlere Oberflächenrauhigkeit Rₐ, gemessen nach DIN 4768, beträgt 11 µm.

Die Oberfläche gewährleistet eine feste Haftung von darauf abgeschiedenen Schichten. Partikelprobleme aufgrund geschädigter oberflächennaher Schichte wurden nicht beobachtet. Mit der dargestellten Oberflächenstruktur wurde eine Steigerung der abscheidbaren Schichtdicke um 40% erreicht. Konkret konnte eine feste Haftung 180 µm dicker Materialschichten erreicht werden, während bisher die maximale Schichtdicke bei ca. 125 µm lag.

Auf der HMBL-Schicht 5 haften Materialschichten somit sehr gut. Da sich die HMBL-Schicht 5 bei der in Figur 1 gezeigten Ausführungsform, abgesehen vom unteren Teil der Seitenwand, über die gesamte Innenoberfläche der Glocke erstreckt, ist die dargestellte Quarzglas-Glocke besonders gut für solche Anwendungen geeignet, bei denen es zu Abscheidungen von Materialschichten im gesamten Innenraum der Reaktionskammer kommt. Dies ist beispielsweise bei CVD-Beschichtungsanlagen der Fall.

Die schematischen Darstellung von **Figur 2** zeigt eine weitere Ausführungsform des erfindungsgemäßen Bauteils, ebenfalls in Form einer Quarzglas-Glocke in Seitenansicht. Die Quarzglas-Glocke ist rotationssymmetrisch, wobei in Figur 2 nur der Ausschnitt bis zur Rotationsachse dargestellt ist.

Ein Basiskörper 7 weist eine Seitenwand 8 auf, die in eine Kuppeldecke 9 übergeht. Der freie Rand des Basiskörpers 7 ist mit einem Flansch 10 versehen, dessen Innendurchmesser ca. 40 cm beträgt. Basiskörper 7 und Flansch 10 bestehen aus opakem Quarzglas, das aus natürlich vorkommenden Quarzrohstoffen erschmolzen ist.

Die Innenseite des Basiskörpers 7 ist im Bereich der Kuppeldecke 9 mit einer HMBL-Schicht 11 versehen, die eine Dicke von ca. 2 mm und - bei einer Projektion auf die Flanschebene 15 - einen Durchmesser von ca. 30 cm aufweist. Die Morphologie der HMBL-Schicht 11 entspricht der in Figur 4 gezeigten Oberflächenstruktur; auf die obigen Angaben dazu wird verwiesen.

Die HMBL-Schicht 11 ist umgeben von einer in der Projektion auf die Flanschebene 15 ringförmigen Schicht, die nachfolgend als TH-Schicht 13 bezeichnet wird. Die TH-Schicht 13 besteht aus hochreinem, synthetischem, transparentem Quarzglas und sie weist eine Schichtdicke von ebenfalls etwa 2 mm auf. Die Breite der TH-Schicht beträgt etwa 10 cm.

Die TH-Schicht 13 geht wiederum in eine weitere Quarzglas-Schicht 14 über, die sich von der TH-Schicht 13 bis zum unteren Rand der Quarzglas-Glocke erstreckt.

Bei der in Figur 2 dargestellten Ausführungsform der Quarzglas-Glocke überdeckt die HMBL-Schicht 11 einen Aufrauhungsbereich, in dem während des bestimmungsgemäßen Einsatzes der Glocke Materialabscheidungen erwartet werden. Die TH-Schicht 13 hingegen überdeckt einen Abtragungsbereich der Quarzglas-Glocke, in dem während der Einsatzes Wandmaterial der Glocke abgetragen wird. Da die TH-Schicht 13 aus hochreinem, synthetischem Quarzglas besteht, sind derartige Abtragungen im Hinblick auf Verunreinigungen des Reaktorraumes unkritisch.

Die Quarzglas-Glocke gemäß Figur 2 ist daher besonders gut für solche Anwendungen geeignet, bei denen es gleichzeitig zu Abscheidungen von Materialschichten in einem Aufrauhungsbereich, und zu Abtragungen in einem, räumlich davon getrennten Abtragungsbereich der Quarzglas-Glocke kommt. Dies ist beispielsweise bei Plasma-Ätzanlagen für die Reinigung von Halbleiterscheiben der Fall.

Nachfolgend wird ein Ausführungsbeispiel für ein Verfahren zur Herstellung der in Figur 2 gezeigten Quarzglas-Glocke beschrieben:

Es wird eine Vorform für die Quarzglas-Glocke mittels der bekannten Einstreutechnik hergestellt. Hierzu wird zunächst in eine metallische Schmelzform Quarzsand eingefüllt und dieses unter Rotation der Schmelzform um ihre vertikale Achse zu einer körnigen Außenschicht mit einer Schichtdicke von etwa 20 mm geformt. Die so hergestellte Außenschicht wird anschließend mittels eines Lichtbogens von innen erhitzt und dabei zu opakem Quarzgals gesintert.

Beim Sintern der Außenschicht im Bereich der Kuppeldecke 9 wird in die Schmelzform Quarzsand eingestreut, dem 0,08 Gew.-% Si₃N₄ beigemischt sind. Durch die vom Lichtbogen erzeugte Gasströmung wird das Pulvergemisch in Richtung der Kuppeldecke 9 geschleudert und schmilzt dabei unter Bildung der HMBL-Schicht 11 auf. Durch die Reaktion von Si₃N₄ mit Sauerstoff und der damit einhergehenden Freisetzung von Gasen bilden sich gleichzeitig die Mikroporen in der HMBL-Schicht 11 aus.

Anschließend wird anstelle des Quarzsandes Si₃N₄ -freie, hochreine, synthetische Quarzglas-Körnung eingestreut, wobei der Lichtbogen langsam aus der Schmelzform nach oben herausgezogen wird. Dabei bildet sich die transparente TH-Schicht 12 im Abtragungsbereich der Seitenwand 8 entsprechend dem oben erläuterten Verfahren .

Sobald der Lichtbogen in den Randbereich der Außenform gelangt, wird anstelle der hochreinen synthetische Quarzglas-Körnung wieder Quarzsand eingestreut, aus der die Quarzglas-Schicht 14 entsprechend gebildet wird.

Nach dem Abkühlen der so hergestellten Vorform wird der Abscheidungsbereich um die HMBL-Schicht 11 durch Sandstrahlen weiter aufgerauht und durch kurzes Ätzen gereinigt, wobei die in Figur 4 gezeigte Oberflächenstruktur mit offenen Mikroporen erzeugt werden. Zum Sandstrahlen wird relativ weiche Quarzglas-Körnung eingesetzt, die die Oberfläche nur wenig beeinirächtigt. Zur Fertigstellung der Quarzglas-Glocke wird anschließend noch der Flansch 10 angeschmolzen.

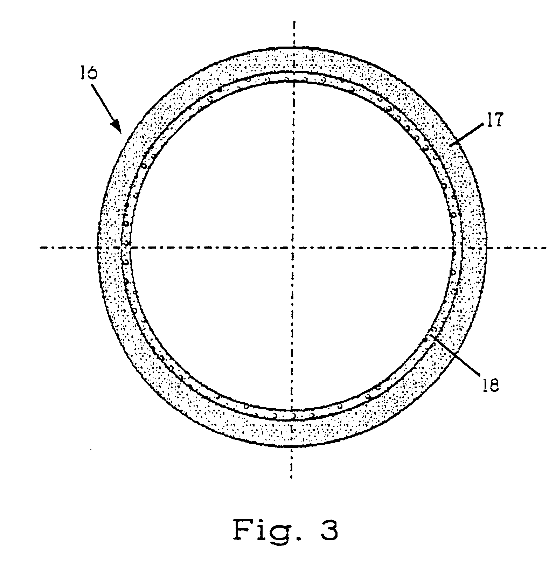

Bei dem in **Figur 3** dargestellten Bauteil handelt es sich um ein vertikal orientiertes Heizrohr 16, durch das Quarzglas-Granulat hindurchgeleitet und dabei auf hohe Temperaturen um 1500 °C erhitzt wird. Dabei dampft SiO₂ ab und schlägt sich als Sublimat an den kälteren Stellen der Rohr-Innenwandungen nieder.

Das Heizrohr 16 besteht aus einem Quarzglasrohr 17, das innen vollständig mit einer HMBL-Schicht 18 versehen ist. Die HMBL-Schicht 18, die eine Dicke von ca. 4 mm aufweist, zeichnet sich durch hohes Haftvermögen für das Sublimat aus und verhindert so das Herabfallen von Sublimat-Teilchen von der Innenwandung des Heizrohres 16. Die Morphologie der HMBL-Schicht 11 entspricht der in Figur 4 gezeigten Oberflächenstruktur; auf die obigen Angaben dazu wird verwiesen.

Das Quarzglasrohr 17 wird nach einem bekannten Rotationsschmelz-Verfahren hergestellt, bei dem SiO₂-Körnung einer waagerecht orientierten und um ihre Längsachse rotierenden Form zugeführt und darin aufgeschmolzen wird. Infolge ihrer Rotation bildet sich dabei an der Innenwandung der Form das Quarzglasrohr 17 aus. Anschließend wird die Innenwandung des noch heißen Quarzglasrohres 17 über ihre gesamte Länge und über den gesamten Umfang mit Quarzsand beschichtet, dem 0,08 Gew.-% Si₃N₄ und 0,02 Gew.-% SiC beigemischt sind. Das innenbeschichtete Quarzglasrohr 17 wird anschließend unter oxidierender Atmosphäre auf eine Temperatur um 1600 °C erhitzt, wobei es um seine Längsachse rotiert wird. Dabei schmilzt das Pulvergemisch der Innenbeschichtung unter Freisetzung von gasförmigen Kohlenstoff- und Stickstoffverbindungen auf, wodurch sich die porenhaltige HMBL-Schicht 18 bildet.

Nach dem Abkühlen des so hergestellten Rohlings wird der Abscheidungsbereich, in diesem Fall die gesamte HMBL-Schicht 18, durch Ätzen weiter aufgerauht und gereinigt.

## Patentansprüche

1. Quarzglas-Bauteil für ein Reaktorgehäuse, umfassend einen Substratkörper aus einer ersten Quarzglas-Qualität, mit einer einem Reaktor-Innenraum zugewandten Innenoberfläche, die in mindestens einem Aufrauhungsbereich eine mittlere Rauhtiefe Rₐ von mehr als 1 µm aufweist, **dadurch gekennzeichnet, daß** im Aufrauhungsbereich eine auf dem Substratkörper (1; 7; 17) ausgebildete Blasenschicht (5; 11; 18) aus einer zweiten Quarzglas-Qualität vorgesehen ist, die offene Poren (31) aufweist.

2. Quarzglas-Bauteil nach Anspruch 1, **dadurch gekennzeichnet, daß** die Dicke der porenhaltigen Blasenschicht (5;11; 18) zwischen 0.5 mm und 5 mm liegt, wobei sie in porenfreies oder porenarmes Quarzglas eingebettet ist.

3. Quarzglas-Bauteil nach einem der vorherghenden Ansprüche, **dadurch gekennzeichnet, daß** die Innenoberfläche in einem Abtragungsbereich von einer Transparentschicht (13) aus hochreinem Quarzglase gebildet wird.

4. Quarzglas-Bauteil nach Anspruch 3, **dadurch gekennzeichnet, daß** die Transparentschicht (13) in Quarzglas geringerer Reinheit eingebettet ist.

5. Quarzglas-Bauteil nach einem der vorhergehenden Ansprüche, **dadurch gekennzeichnet, daß** das Porenvolumen der Blasenschicht mindestens 3%, bevorzugt mindestens 5 %, beträgt.

6. Quarzglas-Bauteil nach einem der vorhergehenden Ansprüche, **dadurch gekennzeichnet, daß** der mittlere Durchmesser der Poren der Blasenschicht im Bereich zwischen 50 µm und 150 µm beträgt, mit der Maßgabe, daß für die Ermittlung des mittleren Durchmessers Poren mit einem Durchmesser von weniger als 10 µm außer acht gelassen werden.

7. Quarzglas-Bauteil nach einem der vorhergehenden Ansprüche, **dadurch gekennzeichnet, daß** die mittlere Porendichte in der Blasenschicht mindestens 30 Poren/mm² beträgt.

8. Verfahren zur Herstellung eines Quarzglas-Bauteils für ein Reaktorgehäuse, insbesondere für eine Reaktorkammer einer Plasma-Ätzvorrichtung, umfassend die folgenden Verfahrensschritte:
a) Formen eines Rohlings aus SiO₂-haltiger Körnung,
b) teilweises oder vollständiges Verglasen des Rohlings durch Erhitzen auf eine Temperatur oberhalb von 1000 °C,
**dadurch gekennzeichnet**,
c) daß der Körnung beim Formen der Innenoberfläche des Rohlings in einem Aufrauhungsbereich eine beim Verglasen unter Freisetzung eines Gases reagierende Zusatzkomponente zugesetzt wird, und
d) daß durch die Freisetzung des Gases im Aufrauhungsbereich eine porenhaltige Blasenschicht (5;11;18) erzeugt wird.

9. Verfahren nach Anspruch 8, **dadurch gekennzeichnet, daß** der Rohling im Aufrauhungsbereich aufgerauht wird, indem oberflächennahe Poren (31) der Blasenschicht (5; 11; 18) geöffnet werden.

10. Verfahren nach Anspruch 8 oder 9, **dadurch gekennzeichnet, daß** das Öffnen der Poren (31) durch Ätzen erfolgt.

11. Verfahren nach Anspruch 8 oder 9, **dadurch gekennzeichnet, daß** das Öffnen der Poren (31) durch Sandstrahlen unter Verwendung einer Quarzglaskörnung erfolgt.

12. Verfahren nach einem der Ansprüche 8 bis 11, **dadurch gekennzeichnet, daß** als Zusatzkomponente Si₃N₄ eingesetzt wird.

13. Verfahren nach einem der Ansprüche 8 bis 12, **dadurch gekennzeichnet, daß** beim Formen der Innenoberfläche des Rohlings nach Verfahrensschritt a) in einem Abtragungsbe eich hochreine SiO₂-Körnung eingesetzt wird, die beim Verglasen nach Verfahrensschritt b) zu einer Transparentschicht (13) verglast wird.

14. Verfahren nach Anspruch 13, **dadurch gekennzeichnet, daß** hochreine Körnung aus synthtisch hergestelltem SiO₂ eingesetzt wird.

15. Verwendung des Bauteils nach einem der Ansprüche 1 bis 7 als Reaktorkammer einer Plasma-Ätzvorrichtung.

## Claims

1. Quartz glass component for a reactor housing, comprising a substrate body of a first quartz glass quality, having an inner surface which faces a reactor interior and has a centre line average value Rₐ of more than 1 µm in at least one roughening region, **characterized in that** a bubble layer (5; 11; 18) formed on the substrate body (1; 7; 17), comprising a second quartz glass quality and having open pores (31) is provided in the roughening region.

2. Quartz glass component according to Claim 1, **characterized in that** the thickness of the pore-containing bubble layer (5; 11; 18) is between 0.5 mm and 5 mm, said bubble layer being embedded in pore-free or low-pore quartz glass.

3. Quartz glass component according to any of the preceding Claims, **characterized in that** the inner surface is formed in a removal region by a transparent layer (13) of high-purity quartz glass.

4. Quartz glass component according to Claim 3, **characterized in that** the transparent layer (13) is embedded in quartz glass of lower purity.

5. Quartz glass component according to any of the preceding Claims, **characterized in that** the pore volume of the bubble layer is at least 3%, preferably at least 5%.

6. Quartz glass component according to any of the preceding Claims, **characterized in that** the mean diameter of the pores of the bubble layer is in the range between 50 µm and 150 µm, with the proviso that pores having a diameter of less than 10 µm are neglected for the determination of the mean diameter.

7. Quartz glass component according to any of the preceding Claims, **characterized in that** the mean pore density in the bubble layer is at least 30 pores/mm².

8. Process for the production of a quartz glass component for a reactor housing, in particular for a reactor chamber of a plasma etching device, comprising the following process steps:
a) forming of a blank from SiO₂-containing particles,
b) partial or complete vitrification of the blank by heating to a temperature above 1000°C,
**characterized in that**
c) an additional component reacting with evolution of a gas on vitrification is added to the particles in a roughening region during forming of the inner surface of the blank, and
d) a pore-containing bubble layer (5; 11; 18) is produced by evolution of the gas in the roughening region.

9. Process according to Claim 8, **characterized in that** the blank is roughened in the roughening region by opening pores (31) of the bubble layer (5; 11; 18) which are dose to the surface.

10. Process according to Claim 8 or 9, **characterized in that** the opening of the pores (31) is effected by etching.

11. Process according to Claim 8 or 9, **characterized in that** the opening of the pores (31) is effected by sand blasting with the use of quartz glass particles.

12. Process according to any of Claims 8 to 11, **characterized in that** Si₃N₄ is used as the additional component.

13. Process according to any of Claims 8 to 12, **characterized in that** high-purity SiO₂ particles which vitrify to give a transparent layer (13) on vitrification according to process step b) are used during forming of the inner surface of the blank according to process step a) in a removal region.

14. Process according to Claim 13, **characterized in that** high-purity particles of synthetically prepared SiO₂ are used.

15. Use of the component according to any of Claims 1 to 7 as a reactor chamber of a plasma etching device.

## Revendications

1. Composant en verre de quartz pour une enveloppe de réacteur, comprenant un corps de substrat réalisé dans une première qualité de verre de quartz, avec une surface interne tournée vers l'espace interne d'un réacteur, surface qui présente dans au moins une zone de rugosité une profondeur de rugosité moyenne Ra supérieure à 1 µm, **caractérisé en ce que** dans la zone de rugosité, il est prévu une couche de bulles (5; 11; 18) formée sur le corps de substrat (1; 7; 17) et réalisée dans une seconde qualité de quartz qui présente des pores ouverts (31).

2. Composant en verre de quartz, selon la revendication 1, **caractérisé en ce que** l'épaisseur de la couche de bulles contenant des pores (5, 11, 18) est comprise entre 0,5 mm et 5 mm, la couche étant enrobée dans un verre de quartz exempt ou pauvre en pores.

3. Composant en verre de quartz selon l'une des revendications précédentes, **caractérisé en ce que** la surface interne est formée dans une zone de dénudation de la couche transparente (13) en verre de quartz extrêmement pur.

4. Composant en verre de quartz selon la revendication 3, **caractérisé en ce que** la couche transparente (13) est enrobée dans un verre de quartz de moindre pureté.

5. Composant en verre de quartz selon l'une des revendications précédentes, **caractérisé en ce que** le volume des pores de la couche de bulle s'élève au moins à 3 %, de préférence 5 %.

6. Composant en verre de quartz selon l'une des revendications précédentes, **caractérisé en ce que** le diamètre moyen des pores de la couche de bulle est compris entre 50 µm et 150 µm, avec le critère que pour la définition du diamètre moyen des pores d'un diamètre inférieur à 10 µm ne sont pas pris en compte.

7. Composant en verre de quartz selon l'une des revendications précédentes, **caractérisé en ce que** la densité moyenne de pore s'élève dans la couche de bulle à au moins 30 pores/mm².

8. Procédé pour la fabrication d'un composant en verre de quartz pour une enveloppe de réacteur, en particulier pour une chambre de réacteur d'un dispositif de mordançage par plasma, comprenant les étapes de procédé suivantes :
a) moulage d'une préforme d'une granulation de SiO2,
b) vitrification partielle ou totale de la préforme par échauffement à une température supérieure à 1000°C,
**caractérisé en ce que** ,
c) la granulation est ajoutée lors du moulage de la surface interne de la préforme dans une zone de rugosité à un composant additif réagissant à la libération d'un gaz lors de la vitrification, et
d) par le dégagement du gaz dans la zone de rugosité, une couche de bulle contenant des pores (5; 11; 18) est formée.

9. Procédé selon la revendication 8, **caractérisé en ce que** la préforme est rendue rugueuse dans la zone de rugosité en ouvrant les pores près de la surface (31) de la couche de bulles (5; 11; 18).

10. Procédé selon la revendication 8 ou 9, **caractérisé en ce que** l'ouverture des pores (31) s'effectue par mordançage.

11. Procédé selon la revendication 8 ou 9, **caractérisé en ce que** l'ouverture des pores (31) s'effectue par décapage au sable en utilisant une granulation de verre de quartz.

12. Procédé selon l'une des revendications 8 à 11, **caractérisé en ce qu'**on utilise du Si₃N₄ comme composant additif.

13. Procédé selon l'une des revendications 8 à 12, caractérisé en ce lors du moulage de la surface interne de la préforme selon l'étape de procédé a), il est utilisé une granulation SiO2 de pureté élevée dans la zone de dénudation qui est vitrifiée en une couche transparente (13) lors de la vitrification selon l'étape de procédé b).

14. Procédé selon la revendication 13, **caractérisé en ce qu'**une granulation de pureté élevée en SiO2 de fabrication synthétique est utilisée.

15. Utilisation du composant selon l'une des revendications 1 à 17 en tant que chambre de réacteur d'un dispositif de mordançage par plasma.
